# EUROPEAN PATENT APPLICATION

(11) **EP 3 789 360 A1**
(43) Date of publication of application: **10.03.2021**
(21) Application number: 18917524.3
(22) Date of filing: 07.08.2018
(51) Int. Cl.: C04B 24/42

(54) **MIGRATION INHIBITOR FOR INTERNAL AND EXTERNAL MOISTURE OF CONCRETE**

(30) Priority: 03.05.2018 CN 201810415559
(71) Applicant: Yellow River Engineering Consulting Co., Ltd. (YREC), Zhengzhou Henan 450003 (CN)
(72) Inventor: ZHANG, Jinliang, Zhengzhou, Henan 450003 (CN); SU, Maolin, Zhengzhou, Henan 450003 (CN); SHANG, Hongqi, Zhengzhou, Henan 450003 (CN); WU, Fachen, Zhengzhou, Henan 450003 (CN); JING, Laihong, Zhengzhou, Henan 450003 (CN); MAO, Wenran, Zhengzhou, Henan 450003 (CN); YANG, Lin, Zhengzhou, Henan 450003 (CN); CHEN, Xueli, Zhengzhou, Henan 450003 (CN)
(74) Representative: Müller-Boré & Partner Patentanwälte PartG mbB
(86) International application number: PCT/CN2018/099072
(87) International publication number: WO 2019/210598

(57) **Abstract**

Disclosed is a migration inhibitor for internal and external moisture of concrete, and the preparation method therefor is as follows: firstly, subjecting a phlogopite powder/muscovite powder, clinoptilolite/mordenite powder and a kaolin powder to a special treatment; and uniformly mixing same at a ratio of 50-70:0-30:0-50, adding a mixed liquor of isopropanol and n-butanol and subjecting same to an ultrasonic treatment; adding an appropriate amount of a silane coupling agent under magnetic stirring, and slowly adding an appropriate amount of distilled water below the liquid surface of the solution, slowly adding a methyl silicone oil modifier at a constant speed, and magnetically stirring same for 1h; drying , grinding and sieving the slurry to obtain a finished product of the moisture migration inhibitor.

## Description

### TECHNICAL FIELD

The disclosure relates to a concrete admixture, especially relaters to a migration inhibitor for internal and external moisture of concrete in a plasticizing stage, a hardening stage and a post hardening stage.

### BACKGROUND

In the construction process, the formation of concrete includes three stages: a plasticizing stage, a hardening stage and a post hardening stage. In the plasticizing stage, the concrete should meet the requirements of workability. In the hardening stage, the concrete should meet the requirements of continuous strength growth and crack resistance etc. In the post hardening stage, the concrete should meet the requirements of strength and durability, etc. Thus, the improvement of concrete performance should be considered in the term of the whole life of the concrete.

After the concrete is poured, due to bleeding and poor humidity, water is evaporated from the concrete into the air. If the moisture volatilization rate of the surface layer of concrete exceeds the bleeding rate, the surface layer will lose water and dry, which will cause the surface hydration reaction to stop and plastic shrinkage cracks tend to occur. Usually, the used film covering does not start until the concrete is close to the initial solidification. Premature covering has an adverse effect on the flatness and aesthetics of the concrete surface, and the amount of moisture volatilized in the concrete is very large during the period from the completion of initial solidification. This is a problem to be solved for moisture migration in the plasticizing stage of concrete.

After the concrete is finally solidified and the mold is removed, under a dry environment, the water in the capillary pores of the concrete evaporates, which increases the surface tension of the pores and forms a negative pressure and leads to drying shrinkage. In the early age, when the tensile strength of concrete cannot resist the shrinkage stress, dry shrinkage cracks will occur. Cracks not only affect the appearance of concrete structures, but also accelerate the degradation process of concrete. Especially for reinforced concrete structures in harsh environments, such as oceans, cold and frozen environments, sulphate or carbonization and other areas with severe chemical erosion, the cracks make it easier for air, water, and harmful media to invade, and quickly cause corrosion of steel bars or deterioration of cement-based materials, reduce the durability of concrete materials and the service life of structures. In addition, the loss of water is not conducive to the continuous growth of concrete strength. This is a problem to be solved for moisture migration in the concrete hardening stage.

Concrete is a hydrophilic material. Although the hardened concrete has high strength and compactness, during the 50 or even 100 years of use of the concrete structure design, the ordinary concrete structure is not dense with respect to water, but is permeable. The research results show that the porosity of concrete with a water-binder ratio of 0.5∼0.7 after hydration is about 16%. Concrete with micro-cracks and porosity is corroded and loaded by cold-heat cycles, dry-wet cycles, and the micro-cracks and voids are communicated. Corrosive substances such as O₂, CO₂, Cl⁻, etc. will penetrate into the concrete along with moisture, resulting alkali aggregate reaction, sulfate erosion, steel reinforcement corrosion, etc., eventually leading to concrete cracking, peeling off and destruction. Most of the corrosion of concrete occurs under the intrusion of water and harmful ions. The corrosion damage process is closely related to water. Therefore, the water permeability of concrete is considered to be one of the most important indicators for evaluating the durability of concrete. Professor P.K.Metha, the dean of the international concrete industry, pointed out in his book "Concrete Microstructure, Performance and Materials" that water is not only a component of many natural materials, but also the medium by which the natural materials are destroyed. It is the core of most concrete durability problems. This is a problem to be solved in the moisture migration of concrete in the post-hardening stage.

### SUMMARY

The object of this invention is providing a migration inhibitor for internal and external moisture of concrete to solve a problem of the moisture migration in a plasticizing stage, a hardening stage and a post hardening stage.

To achieve the object, the following technical solution is adopted by this invention.

The disclosure provides a migration inhibitor for internal and external moisture of concrete, comprising a phlogopite powder or muscovite powder, clinoptilolite or mordenite, and kaolin, and the migration inhibitor for moisture being prepared as follows:
1) grinding the phlogopite powder or muscovite powder and sieving using a 300∼400 mesh sieve, and drying; grinding the clinoptilolite or mordenite powder and sieving using a 300-mesh sieve; and calcining the kaolin at a temperature of 750∼800°C, and grinding the kaolin calcined and sieving using a 500-mesh sieve;
2) uniformly mixing the phlogopite powder or muscovite powder, the clinoptilolite or mordenite powder, and the kaolin powder in a weight ratio of 50∼70: 0∼30: 0∼50; adding a solution comprising isopropanol and n-butanol (the volume ratio is 1:1) to a mixture of the phlogopite powder or muscovite powder, the clinoptilolite or mordenite, and the kaolin, thereby yielding a mixed solution; ultrasonically treating the mixed solution for 10 min, and then magnetically stirring the mixed solution for 10 min, wherein the amount of the clinoptilolite or mordenite, and the kaolin cannot be zero simultaneously;
3) slowly adding an appropriate amount of silane coupling agent to the mixed solution by a pipette under a magnetically stirring, and continuously magnetically stirring the mixed solution mixed with the silane coupling agent for 30 min; slowly adding an appropriate amount of distilled water to the mixed solution mixed with the silane coupling agent at an appropriate increased magnetic stirring speed, and continuously magnetically stirring for 30 min; and slowly adding methyl silicone oil to the mixed solution mixed with the silane coupling agent and the distilled water at a constant speed, and magnetically stirring for an hour, thereby yielding a slurry; and
4) drying the slurry in a temperature of 150∼200°C into powders in a blowing dry oven, and grinding and sieving the powders, thereby yielding a finished product of the moisture migration inhibitor.

The clinoptilolite or mordenite powder has an ammonium absorption rate greater than or equal to 130 mmol/100 g.

The kaolin calcined has a specific area greater than or equal to 15000 m²/kg, and comprises greater than or equal to 50 wt. % of SiO₂, and greater than or equal to 40 wt. % of Al₂O₃.

When the moisture migration inhibitor prepared by the present invention is used, it is added to the concrete at a ratio of 3% ∼ 6% of the mass of the cementitious material in the concrete, and it can be mixed and poured normally.

The invention has the advantages of low raw material cost, simple preparation method and outstanding water blocking effect. The specific advantages are given as follows.
1. The migration inhibitor for moisture comprises phlogopite powder or muscovite powder (mica powder), clinoptilolite or mordenite (zeolite powder), and kaolin as raw materials. Mica powder is a natural flake mineral with high diameter-thickness ratio. When the mica powder is added to the concrete, a water blocking barrier is formed thus blocking the water migration between inside and outside of the concrete. Zeolite powder is a kind of porous lattice mineral which has huge internal surface area and strong water storage function, and can reduce the water bleeding of the concrete. Moreover, in the process of concrete hydration reaction, water is released slowly to promote strength growth. As a kind of ultra-fine admixture, kaolin has a good micro-aggregate filling effect and can reduce the size and quantity of the micropores of the concrete. The above materials are respectively ground to different finenesses, which can form the filling of different size micropores in the concrete. The barrier of mica powder, the absorption of zeolite powder and the filling of kaolin can reduce the speed and volume of the water migration in the plasticizing stage of the concrete. Since the superhydrophobic treatment of the substrate used in the present invention does not change the physical structure characteristics of the substrate, all the functions of the substrate after modification will not be affected.
2. After super-hydrophobic modification of the above materials, the surface energy of the materials is greatly reduced. Under normal circumstances, the water in the capillary pores of the concrete evaporates, the surface tension of the capillary pores is increased and forms a negative pressure, causing the concrete to dry and shrink. The migration inhibitor for moisture can reduce the surface energy of the capillary pores of the concrete, increase the contact angle between the capillary pores and the water, and reduce the dry shrinkage of the concrete.
3. Concrete is a porous hydrophilic material. Studies have proved that when external moisture is in contact with concrete, capillary adsorption is the main reason why moisture enters the interior of the concrete. After the adsorption occurs, the corrosive substances invade the inside of the concrete along with the moisture, causing sulfate erosion, steel corrosion, freeze-thaw damage, etc., and eventually cause the concrete to crack, spall and destroy. The surface and interior of the concrete comprising the migration inhibitor for moisture exhibit a superhydrophobic effect, thus reducing the adsorption of the concrete for water, and preventing external water from entering the concrete.

### DETAILED DESCRIPTION

To further illustrate the invention, embodiments detailing a migration inhibitor for internal and external moisture of concrete are described below. It should be noted that the following embodiments are intended to describe and not to limit the disclosure.

### Example 1

The disclosure provides a migration inhibitor for internal and external moisture of concrete. The migration inhibitor for moisture, with muscovite, mordenite, and kaolin as raw materials, is prepared as follows:
1) Treatment of raw materials: Muscovite, mordenite having an ammonium absorption rate greater than or equal to 130 mmol/100 g, and kaolin having a specific area greater than or equal to 15000 m²/kg, and comprising greater than or equal to 50 wt. % of SiO₂ and greater than or equal to 40 wt. % of Al₂O₃ were purchased. The muscovite was ground and sieved using a 400-mesh sieve and dried. The mordenite was ground and sieved using a 300-mesh sieve. The kaolin was calcined at a temperature of 750∼800°C, ground and sieved using a 500-mesh sieve. 60 g of the muscovite powders, 10 g of the mordenite powders and 30 g of the kaolin powders were evenly mixed in a powder mixer, to yield a base material.
2) Ultrasonic treatment: 50 g of the base material was added to a solution comprising isopropanol and n-butanol (volume ratio of 1: 1). The mixture of the base material and the solution was sonicated for 10 min, and then magnetically stirred at 1000 rpm for 10 min.
3) Modified treatment: 3 mL of the silane coupling agent KH-550 was added using a pipette to the mixture obtained in 2). The mixture comprising the silane coupling agent were continuously magnetically stirred for 30 min. 3 mL of distilled water was added to the mixture and stirred at 1100 rpm for 30 min. Thereafter, 6.5 mL of methyl silicone oil was added to the mixture and magnetically stirred for an hour, thereby yielding a slurry.
4) The slurry was dried in a drying box at the temperature of 200°C, and then ground and sieved, thereby yielding the finished product of the moisture migration inhibitor.

In actual engineering application, the preparation amount of the migration inhibitor for moisture can be expanded as needed. The migration inhibitor for moisture in this example is particularly suitable for use in the concrete construction for sulfate resistance.

### Example 2

The disclosure provides a migration inhibitor for internal and external moisture of concrete. The migration inhibitor for moisture, with muscovite and mordenite as raw materials, is prepared as follows:
1) Treatment of raw materials: Muscovite, and mordenite having an ammonium absorption rate greater than or equal to 130 mmol/100 g were purchased. The muscovite was ground and sieved using a 400-mesh sieve and dried. The mordenite was ground and sieved using a 300-mesh sieve. 70 g of the muscovite powders and 30 g of the mordenite powders were evenly mixed in a powder mixer, to yield a base material.
2) Ultrasonic treatment: 50 g of the base material was added to a solution comprising isopropanol and n-butanol (volume ratio of 1: 1). The mixture of the base material and the solution was sonicated for 10 min, and then magnetically stirred at 1000 rpm for 10 min.
3) Modified treatment: 4 mL of the silane coupling agent KH-550 was added using a pipette to the mixture obtained in 2). The mixture comprising the silane coupling agent were continuously magnetically stirred for 30 min. 4 mL of distilled water was added to the mixture and stirred at 1100 rpm for 30 min. Thereafter, 7.5 mL of methyl silicone oil was added to the mixture and magnetically stirred for an hour, thereby yielding a slurry.
4) The slurry was dried in a drying box at the temperature of 150°C, and then ground and sieved, thereby yielding the finished product of the moisture migration inhibitor.

In actual engineering application, the preparation amount of the migration inhibitor for moisture can be expanded as needed. The migration inhibitor for moisture in this example is particularly suitable for use in the concrete construction in the dry areas.

### Example 3

The disclosure provides a migration inhibitor for internal and external moisture of concrete. The migration inhibitor for moisture, with muscovite and kaolin as raw materials, is prepared as follows:
1) Treatment of raw materials: Muscovite, and the kaolin having a specific area greater than or equal to 15000 m²/kg and comprising greater than or equal to 50 wt. % of SiO₂ and greater than or equal to 40 wt. % of Al₂O₃ were purchased. The muscovite was ground and sieved using a 1000-mesh sieve and dried. The kaolin was calcined at a temperature of 750∼800°C, ground and sieved using a 500-mesh sieve. 50 g of the muscovite powders and 50 g of the kaolin powders were evenly mixed in a powder mixer, to yield a base material.
2) Ultrasonic treatment: 50 g of the base material was added to a solution comprising isopropanol and n-butanol (volume ratio of 1: 1). The mixture of the base material and the solution was sonicated for 10 min, and then magnetically stirred at 1000 rpm for 10 min.
3) Modified treatment: 5 mL of the silane coupling agent KH-550 was added using a pipette to the mixture obtained in 2). The mixture comprising the silane coupling agent were continuously magnetically stirred for 30 min. 5 mL of distilled water was added to the mixture and stirred at 1200 rpm for 30 min. Thereafter, 8.5 mL of methyl silicone oil was added to the mixture and magnetically stirred for an hour, thereby yielding a slurry.
4) The slurry was dried in a drying box at the temperature of 200°C, and then ground and sieved, thereby yielding the finished product of the moisture migration inhibitor.

In actual engineering application, the preparation amount of the migration inhibitor for moisture can be expanded as needed. The migration inhibitor for moisture in this example is particularly suitable for use in the concrete construction for impermeability and anti-chloride erosion.

### Example 4

### Inhibition test of water evaporation

According to the operation steps of the inhibition test of water evaporation specified in *Inhibitor of water evaporation in plasticizing stage of concrete* (JG/T477-2015, China), the inhibition tests of water evaporation of the compositions of matter in Examples **1-3** were carried out.

The water-cement ratio was 0.40, and the cement satisfied the Chinese National Standard GB8076-2008. The stainless-steel mold was tested, with the size of 300 mm × 150 mm × 30 mm. The control group was provided with no inhibitor, and the experimental groups were provided with the migration inhibitor for moisture accounting for 3.0 wt. % or 5.0 wt. % of the cement. The test results are shown in Table **1.**

**Table 1 Test results of inhibition of water evaporation**

| Test group | No. | Weight percent of composition of matter (wt. %) | Inhibition rate (%) | |
|---|---|---|---|---|
| | | | 1h | 4h |
| Control group | JZ | 0 | / | / |
| Example 1 | YZJ1-3.0 | 3.0 | 55 | 30 |
| | YZJ1-5.0 | 5.0 | 67 | 37 |
| Example 2 | YZJ2-3.0 | 3.0 | 44 | 26 |
| | YZJ2-5.0 | 5.0 | 50 | 33 |
| Example 3 | YZJ3-3.0 | 3.0 | 60 | 28 |
| | YZJ3-5.0 | 5.0 | 73 | 38 |

As shown in Table. **1,** in Example **1,** when the addition amount of the migration inhibitor for moisture accounts for 3.0% and 5.0% of the cement, one hour later, the inhibition rate of water evaporation of the migration inhibitor for moisture in the concrete are 55% and 67%, respectively; 4 hours later, the inhibition rate of water evaporation of the migration inhibitor for moisture are 30% and 37%, respectively. In Example **2,** when the addition amount of the migration inhibitor for moisture accounts for 3.0% and 5.0% of the cement, one hour later, the inhibition rate of water evaporation of the migration inhibitor for moisture are 44% and 50%, respectively; 4 hours later, the inhibition rate of water evaporation of the migration inhibitor for moisture are 26% and 33%, respectively. In Example **3,** when the addition amount of the migration inhibitor for moisture accounts for 3.0% and 5.0% of the cement, one hour later, the inhibition rate of water evaporation of the migration inhibitor for moisture are 60% and 73%, respectively; 4 hours later, the inhibition rate of water evaporation of the migration inhibitor for moisture are 28% and 38%, respectively. The results show the inhibition rates of water evaporation of the compositions of matter in the concrete all exceed 25% after 4 hours' experiments, which means the migration inhibitor for moisture of the disclosure satisfies the standard specified in specified in *Inhibitor of water evaporation in plasticizing stage of concrete* (JG/T477-2015, China).

### Example 5

### Tests of dry shrinkage and water absorption of concrete

The dry shrinkage tests of concrete in a control group and the test groups were carried out according to the method specified in the standard for test methods of long-term performance and durability of ordinary concrete (GB50082-2009, China).

The water-cement ratio of the concrete was 0.40; the natural medium sand accounted for 40 wt. % of the concrete; the slump was controlled within 180 ± 10 mm; the observation period was 3∼28 days, covering the two stages from hardening to post hardening of the concrete. The test results are shown in Table **2.**

**Table 2 Test results of dry shrinkage and water absorption of concrete**

| Test group | No. | Weight percent of composition of matter (wt. %) | Dry shrinkage (× 10⁻⁶) | | | | Water absorption (%) |
|---|---|---|---|---|---|---|---|
| | | | 3 d | 7 d | 14 d | 28 d | 28 d |
| Control group | JZ | 0 | 120 | 154 | 206 | 273 | / |
| Example 1 | YZJ1-3.0 | 3.0 | 50 | 109 | 174 | 253 | 62 |
| | YZJ1-5.0 | 5.0 | 40 | 74 | 139 | 205 | 54 |
| Example 2 | YZJ2-3.0 | 3.0 | 98 | 132 | 180 | 250 | 78 |
| | YZJ2-5.0 | 5.0 | 53 | 86 | 162 | 223 | 60 |
| Example 3 | YZJ3-3.0 | 3.0 | 44 | 110 | 165 | 222 | 60 |
| | YZJ3-5.0 | 5.0 | 32 | 63 | 116 | 168 | 47 |

As shown in Table. **2,** compared with the control group, in Example **1,** when the addition amount of the migration inhibitor for moisture accounts for 3.0% and 5.0% of the cement, 3 days later, the dry shrinkage of the concrete reduces by 58.3% and 66.7%, respectively; 7 days later, the dry shrinkage of the concrete reduces by 29.2% and 51.9%, respectively; 14 days later, the dry shrinkage of the concrete reduces by 15.5% and 32.5%, respectively; and 28 days later, the dry shrinkage of the concrete reduces by 7.3% and 24.9%, respectively. In Example **2,** when the addition amount of the migration inhibitor for moisture accounts for 3.0% and 5.0% of the cement, 3 days later, the dry shrinkage of the concrete reduces by 18.3% and 55.8%, respectively; 7 days later, the dry shrinkage of the concrete reduces by 14.3% and 44.2%, respectively; 14 days later, the dry shrinkage of the concrete reduces by 12.6% and 21.4%, respectively; and 28 days later, the dry shrinkage of the concrete reduces by 8.4% and 18.3%, respectively. In Example **3,** when the addition amount of the migration inhibitor for moisture accounts for 3.0% and 5.0% of the cement, 3 days later, the dry shrinkage of the concrete reduces by 66.3% and 73.3%, respectively; 7 days later, the dry shrinkage of the concrete reduces by 28.6% and 59.1%, respectively; 14 days later, the dry shrinkage of the concrete reduces by 19.9% and 43.7%, respectively; and 28 days later, the dry shrinkage of the concrete reduces by 18.7% and 38.5%, respectively. The tests show that the compositions of matter exhibit water retention properties.

The water absorption tests of the hardened concrete in the control group and the test groups were carried out according to the method specified in *waterproof agent for mortar and concrete* (JC4754-2008, China). The test results are shown in Table **2.**

As shown in Table. **2,** in Example **1,** when the addition amount of the migration inhibitor for moisture accounts for 3.0% and 5.0% of the cement, the water absorption of the concrete is 62% and 54%, respectively. In Example **2,** when the addition amount of the migration inhibitor for moisture accounts for 3.0% and 5.0% of the cement, the water absorption of the concrete is 78% and 60%, respectively. In Example **3,** when the addition amount of the migration inhibitor for moisture accounts for 3.0% and 5.0% of the cement, the water absorption of the concrete is 60% and 47%, respectively. The tests show that the water absorptions of the concretes mixed with the compositions of matter decreased, which means the compositions of matter can inhibit the permeation of external water into the concrete.

It will be obvious to those skilled in the art that changes and modifications may be made, and therefore, the aim in the appended claims is to cover all such changes and modifications.

## Claims

1. A migration inhibitor for internal and external moisture of concrete, comprising a phlogopite powder or muscovite powder, clinoptilolite or mordenite, and kaolin, and the migration inhibitor for moisture being prepared as follows:
1) grinding the phlogopite powder or muscovite powder and sieving using a 300∼400 mesh sieve, and drying; grinding the clinoptilolite or mordenite powder and sieving using a 300-mesh sieve; and calcining the kaolin at a temperature of 750∼800°C, and grinding the kaolin calcined and sieving using a 500-mesh sieve;
2) uniformly mixing the phlogopite powder or muscovite powder, the clinoptilolite or mordenite powder, and the kaolin powder in a weight ratio of 50∼70: 0∼30: 0∼50; adding a solution comprising isopropanol and n-butanol to a mixture of the phlogopite powder or muscovite powder, the clinoptilolite or mordenite, and the kaolin, thereby yielding a mixed solution; ultrasonically treating the mixed solution for 10 min, and then magnetically stirring the mixed solution for 10 min;
3) slowly adding an appropriate amount of silane coupling agent to the mixed solution by a pipette under a magnetically stirring, and continuously magnetically stirring the mixed solution mixed with the silane coupling agent for 30 min; slowly adding an appropriate amount of distilled water to the mixed solution mixed with the silane coupling agent at an appropriate increased magnetic stirring speed, and continuously magnetically stirring for 30 min; and slowly adding methyl silicone oil to the mixed solution mixed with the silane coupling agent and the distilled water at a constant speed, and magnetically stirring for an hour, thereby yielding a slurry; and
4) drying the slurry at a temperature of 150∼200°C into powders in a blowing dry oven, and grinding and sieving the powders, thereby yielding a finished product of the moisture migration inhibitor.

2. The migration inhibitor for internal and external moisture of concrete of claim 1, wherein the clinoptilolite or mordenite powder has an ammonium absorption rate greater than or equal to 130 mmol/100 g.

3. The migration inhibitor for internal and external moisture of concrete of claim 1, wherein the kaolin calcined has a specific area greater than or equal to 15000 m²/kg, and comprises greater than or equal to 50 wt. % of SiO₂, and greater than or equal to 40 wt. % of Al₂O₃.
